# EUROPÄISCHE PATENTANMELDUNG

(11) **EP 3 336 383 A2**
(43) Veröffentlichungstag der Anmeldung: **20.06.2018**
(21) Anmeldenummer: 17207048.4
(22) Anmeldetag: 13.12.2017
(51) Int. Cl.: F16H 49/00

(54) **SPANNUNGSWELLENGETRIEBE FÜR EINEN PROGRAMMIERBAREN BEWEGUNGSAUTOMATEN**

(30) Priorität: 13.12.2016 LU 93358
(71) Anmelder: Ovalo GmbH, 65555 Limburg (DE)
(72) Erfinder:
(74) Vertreter: Grabovac, Dalibor

(57) **Zusammenfassung**

Die Erfindung betrifft ein Spannungswellengetriebe mit einem Circularspline (1), dessen Innenverzahnung (2) mit der Außenverzahnung (3) eines Flextopfs (4), der eine Flextopfwandung (5) und einen Flextopfboden (6) aufweist, in Zahneingriff steht. Das Spannungswellengetriebe zeichnet sich dadurch aus, dass der Circularspline (1) einen axial über die Innenverzahnung (2) hinausragenden Teil aufweist, der zusammen mit einem Teilabschnitt der Außenseite der Flextopfwandung (5) ein Schmierstoffreservoir begrenzt, wobei das Verhältnis der axialen Länge (12) des axial über die Innenverzahnung (2) hinausragenden Teils des Circularsplines (1) zu der axialen Länge (13) der Flextopfwandung (5) vom Flextopfboden (6) bis zur Außenverzahnung (3) im Bereich von 1/10 bis 8/10 liegt.

## Beschreibung

Die Erfindung betrifft ein Spannungswellengetriebe mit einem Circularspline, dessen Innenverzahnung mit der Außenverzahnung eines Flextopfs, der eine Flextopfwandung und einen Flextopfboden aufweist, in Zahneingriff steht.

Die Erfindung betrifft außerdem ein motorisiertes Gelenk mit einem solchen Spannungswellengetriebe und darüber hinaus einen programmierbaren Bewegungsautomaten, der ein solches Spannungswellengetriebe oder ein solches motorisiertes Gelenk beinhaltet.

Ein Spannungswellengetriebe besitzt zumeist ein starres, ringförmiges, innenverzahntes Zahnrad, das als Circularspline bezeichnet wird, und ein flexibles außenverzahntes Zahnrad, das im Inneren des starren innenverzahnten Zahnrads angeordnet ist und das als Flexspline bezeichnet wird. Der Circularspline und der Flexspline weisen eine unterschiedliche Zahl von Zähnen auf. Der Flexspline kann in Form eines Flextopfs ausgebildet sein. Innerhalb des Flexsplines ist ein zumeist elliptischer Wellengenerator mittels eines radialflexiblen Wälzlagers rotierbar angeordnet. Der Wellengenerator verformt den Flexspline zu einer elliptischen Form und bringt so die Außenverzahnung des Flexsplines mit der Innenverzahnung des Circularsplines an jedem Ende der Ellipsen-Hauptachse miteinander in Eingriff.

Ein Spannungswellengetriebe mit einem Flextopf ist beispielsweise aus US 6 050 155 A bekannt.

Neben Spannungswellengetrieben der eingangs genannten Art, die einen Flextopf mit einer Flextopfwandung und einem Flextopfboden aufweisen, gibt es auch Wellgetriebe anderer Art. Beispielsweise sind aus DE 11 2011 105 253 T5 und aus DE 11 2013 004 710 T5 Wellgetriebe vom Zylinderhuttyp bekannt. Hinweise bezüglich einer Schmierung offenbaren diese Druckschriften nicht.

Oftmals arbeiten Spannungswellengetriebe mit Fett als Schmiermittel.

Aus DE 10 2008 013 147 A1 ist ein Verfahren zum Schmieren eines Wellreduktionsgetriebes für Hochgeschwindigkeitsrotation bekannt, bei dem Öl von außen durch einen Ölzuführungskanal in das Wellreduktionsgetriebe gepumpt wird und anschließend durch einen Ölrückgewinnungskanal wieder abgesaugt wird. Das Wellreduktionsgetriebe weist insoweit eine Umlaufschmierung (Schmierstoffkreislauf) mit Öl auf.

Es ist die Aufgabe der vorliegenden Erfindung, ein Spannungswellengetriebe anzugeben, das, insbesondere für eine Anwendung in einem programmieren Bewegungsautomaten, besonders langlebig ist.

Diese Aufgabe wird durch ein Spannungswellengetriebe gelöst, das dadurch kennzeichnet ist, dass der Circularspline einen axial über die Innenverzahnung hinausragenden Teil aufweist, der zusammen mit einem Teilabschnitt der Außenseite der Flextopfwandung ein Schmierstoffreservoir begrenzt, wobei
a. das Verhältnis der axialen Länge des axial über die Innenverzahnung hinausragenden Teils des Circularsplines zu der axialen Länge der Flextopfwandung vom Flextopfboden bis zur Außenverzahnung im Bereich von 1/10 bis 8/10 liegt oder wobei
b. das Verhältnis der axialen Länge des axial über den Bereich des Ineingriffs von Innenverzahnung und Außenverzahnung hinausragenden Teils des Circularsplines zu der axialen Länge der Flextopfwandung vom Flextopfboden bis zum Bereich des Ineingriffs von Innenverzahnung und Außenverzahnung im Bereich von 1/10 bis 8/10 liegt.

Die Erfindung hat den ganz besonderen Vorteil, dass für die miteinander in Zahneingriff stehenden Verzahnungen, nämlich die Innenverzahnung des Circularsplines und die Außenverzahnung des Flextopfs, insbesondere auch bei einem Neuanlauf nach einer Betriebsunterbrechung des Spannungswellengetriebes, eine ausreichende Schmierung zur Verfügung steht.

In erfindungsgemäßer Weise wurde erkannt, dass ein Neuanlauf nach einer Betriebsunterbrechung des Spannungswellengetriebes insbesondere dann problematisch ist, wenn das Spannungswellengetriebe, das sich im Betrieb durch Reibung erhitzen kann, in heißem Zustand abgestellt wird und später ein Neuanlauf erfolgt. Hintergrund ist, dass sich das zur Schmierung vorgesehene, erhitzte Fett im Ruhezustand in seine Bestandteile, nämlich die Seife und das Grundöl, aufspalten kann, so dass zu Beginn eines Neuanlaufs nicht genügend Schmierung für die Verzahnungen zur Verfügung steht.

Die vorliegende Erfindung hat den ganz besonderen Vorteil, dass in dem Schmierstoffreservoir unmittelbar angrenzend an die miteinander in Zahneingriff stehenden Verzahnungen, nämlich die Innenverzahnung des Circularspline und die Außenverzahnung des Flextopfs, eine ausreichende Menge an Schmierstoff zur Verfügung steht, das bei einem Betrieb des Spannungswellengetriebes aufgrund der ständig umlaufenden radialen Verformung der Flextopfwandung durchgewalkt wird, was einer Trennung der Schmierstoffbestandteile, insbesondere wenn der Schmierstoff ein Fett ist, entgegen wirkt. Auf diese Weise steht insbesondere bei einem Neuanlauf sehr schnell auch dann ausreichend viel verwendbarer Schmierstoff zur Verfügung, wenn das Spannungswellengetriebe vorher in heißem Zustand abgestellt wurde. Dies deshalb, weil eine etwaig eingetretene Trennung der Schmierstoffbestandteile durch den bei einem Neuanlauf im Bereich des Schmierstoffreservoirs vorhandenen Walkeffekt schnell rückgängig gemacht wird.

Das Durchwalken des in dem Schmierstoffreservoir befindlichen Schmierstoffs beruht im Wesentlichen darauf, dass die Flextopfwandung in den Bereichen der Hochachse des elliptischen Wellengenerators radial nach außen gebogen wird. Die so nach außen gebogenen, einander gegenüberliegenden Teile der Flextopfwandung verlaufen konisch zueinander und sind an den axial überstehenden Teil des Circularsplines angenähert. Wenn der Wellengenerator weiter gedreht wird, entfernen sich die soeben noch angenäherten Teile der Flextopfwandung wieder von dem axial überstehenden Teil des Circularsplines, während sich die Teile der Flextopfwandung, die dann in den Bereichen der Hochachse des elliptischen Wellengenerators angeordnet sind, an den überstehenden Teil des Circularsplines angenähert sind, und so fort.

Der Winkel, unter dem die jeweils an den Circularspline angenäherten Teile der Flextopfwandung stehen, hängt von der axialen Länge der Flextopfwandung und von der Deflektion ab. Unter der Deflektion wird der radiale Weg verstanden, den ein Zahn der Außenverzahnung des Flextopfes beim Wechsel zwischen Niedrigachse und Hochachse zurücklegt. Bezeichnet man die Länge der Hochachse des Flextopfes mit D und die die Länge der Niedrigachse des Flextopfes mit E, so berechnet sich die Deflektion als (D - E) / 2. Daher ist bei einer axial kürzeren Flextopfwandung und gleicher Deflektion der beschriebene Walkeffekt größer.

Die Deflektion kann vorteilhaft im Bereich von 0,3 mm bis 0,9 mm oder im Bereich von 0,4 mm bis 0,8 mm liegen. Vorteilhaft kann die Deflektion alternativ oder zusätzlich im Bereich von 0,5 % bis 1,5% des Teilkreisdurchmessers der Außenverzahnung des Flextopfes liegen.

Bei einer Untersetzung des Spannungswellengetriebes von i=80 kann die Deflektion kann vorteilhaft im Bereich von 0,6 mm bis 0,9 mm, insbesondere im Bereich von 0,7 mm bis 0,8 mm, liegen. Insbesondere kann die Deflektion Bei einer Untersetzung des Spannungswellengetriebes von i=80 0,73 mm betragen.

Bei einer Untersetzung des Spannungswellengetriebes von i=120 kann die Deflektion kann vorteilhaft im Bereich von 0,3 mm bis 0,7 mm, insbesondere im Bereich von 0,4 mm bis 0,6 mm, liegen. Insbesondere kann die Deflektion Bei einer Untersetzung des Spannungswellengetriebes von i=120 0,5 mm betragen.

Es hat sich gezeigt, dass die beschriebene Wirkung vorteilhaft insbesondere bei einer bestimmten axialen Länge des Schmierstoffreservoirs eintritt, nämlich dann, wenn das Verhältnis der axialen Länge des axial über die Innenverzahnung hinausragenden Teils des Circularsplines zu der axialen Länge der Flextopfwandung vom Flextopfboden bis zur Außenverzahnung im Bereich von 1/10 bis 8/10 liegt. Insbesondere kann das Verhältnis der axialen Länge des axial über die Innenverzahnung bzw. über den Bereich des Ineingriffs von Innenverzahnung und Außenverzahnung hinausragenden Teils des Circularsplines zu der axialen Länge der Flextopfwandung vom Flextopfboden bis zur Außenverzahnung vorteilhaft im Bereich von 1/5 bis 3/5, insbesondere bei 2/5, liegen.

Besonders vorteilhaft ist eine Ausführung, bei der das Verhältnis der axialen Länge des axial über die Innenverzahnung bzw. über den Bereich des Ineingriffs von Innenverzahnung und Außenverzahnung hinausragenden Teils des Circularsplines zu der axialen Länge der Flextopfwandung vom Flextopfboden bis zur Außenverzahnung im Bereich von 2/10 bis 6/10 oder im Bereich von 3/10 bis 5/10 oder bei 4/10 liegt, wenn die Untersetzung des Spannungswellengetriebes i=80 beträgt.

Ebenfalls besonders vorteilhaft ist eine Ausführung, bei der das Verhältnis der axialen Länge des axial über die Innenverzahnung bzw. über den Bereich des Ineingriffs von Innenverzahnung und Außenverzahnung hinausragenden Teils des Circularsplines zu der axialen Länge der Flextopfwandung vom Flextopfboden bis zur Außenverzahnung im Bereich von 1/16 bis 10/16 oder im Bereich von 1/8 bis 3/8 oder bei 2/8 liegt, wenn die Untersetzung des Spannungswellengetriebes i=120 beträgt.

Im Hinblick auf den erwähnten Walkeffekt und im Hinblick auf eine ausreichend große im Schmierstoffreservoir bevorratbare Schmierstoffmenge beträgt die radiale Breite des Schmierstoffreservoirs bei einer ganz besonders vorteilhaften Ausführung 2/10 bis 6/10, insbesondere 3/10 bis 5/10, ganz insbesondere 4/10, der axialen Länge des hinausragenden Teils des Circularsplines. Insbesondere kann vorteilhaft vorgesehen sein, dass die radiale Breite des Schmierstoffreservoirs im Bereich von 1 mm bis 2 mm, insbesondere im Bereich von 1,3 mm bis 1,7 mm, liegt oder 1,5 mm beträgt.

Die Zähneanzahl der Außenverzahnung des erfindungsgemäßen Spannungswellengetriebes kann vorteilhaft im Bereich zwischen 152 und 168 oder im Bereich von 232 bis 248 Zähnen liegen. Insbesondere kann Zähneanzahl der Außenverzahnung des erfindungsgemäßen Spannungswellengetriebes genau 160 Zähne oder genau 240 Zähne betragen. Insbesondere kann vorteilhaft vorgesehen sein, dass die Innenverzahnung genau zwei Zähne mehr aufweist, als die Außenverzahnung.

Im Hinblick auf eine bauraumsparende Ausführung, die sich insbesondere zur Verwendung in einem motorisierten Gelenk eines Roboters besonders gut eignet, kann die Außenverzahnung vorteilhaft einen Teilkreisdurchmesser im Bereich von 50 mm bis 53 mm oder im Bereich von 50,5 mm bis 51,5 mm oder von 51,0 mm bis 51,5 mm aufweisen. Analog oder zusätzlich kann vorteilhaft vorgesehen sein, dass die Innenverzahnung einen Teilkreisdurchmesser im Bereich von 50 mm bis 53 mm oder im Bereich von 51,8 mm bis 52,3 mm aufweist.

Besonders vorteilhaft ist eine Ausführung, bei der der Teilkreisdurchmesser 51,2 mm beträgt, wenn die Untersetzung des Spannungswellengetriebes i=80 beträgt. Ebenfalls besonders vorteilhaft ist eine Ausführung, bei der der Teilkreisdurchmesser 51,4 mm beträgt, wenn die Untersetzung des Spannungswellengetriebes i=120 beträgt.

Die Außenverzahnung und/oder die Innenverzahnung können vorteilhaft, eine axiale Länge im Bereich von 7 mm bis 10 mm oder im Bereich von 8 mm bis 9 mm aufweisen. Besonders vorteilhaft ist eine Ausführung, bei der die Außenverzahnung und/oder die Innenverzahnung eine axiale Länge von 8 mm aufweist, wenn die Untersetzung des Spannungswellengetriebes i=80 beträgt. Ebenfalls besonders vorteilhaft ist eine Ausführung, bei der die Außenverzahnung und/oder die Innenverzahnung eine axiale Länge von 9 mm aufweist, wenn die Untersetzung des Spannungswellengetriebes i= 120 beträgt.

Bei einer vorteilhaften Ausführung weist der Flextopfboden einen Befestigungsflansch auf oder ist selbst als Befestigungsflansch ausgebildet. Auf diese Weise ist vorteilhaft erreicht, dass weitere drehmomentübertragende Bauteile einfach angekoppelt werden können.

Der Schmierstoff kann insbesondere Öl, Schmierfett oder ein Festschmierstoff, wie beispielsweise Graphit oder Molybdän(IV)-sulfid, sein. Besonders vorteilhaft ist die Verwendung von Schmierfett, insbesondere ausschließlich von Schmierfett, als Schmierstoff. Soweit im Rahmen dieser Anmeldung von Fett die Rede ist, sind insbesondere pastöse Schmierstoffe, die aus einem Schmieröl und einem Eindicker, wie beispielsweise Seife, Bentonite, Polyharnstoffe, PTFE, bestehen, gemeint.

Vorzugsweise weist das Spannungswellengetriebe keine Umlaufschmierung und keinen Schmierstoffkreislauf auf. Insbesondere ist das Spannungswellengetriebe vorzugsweise nicht dazu ausgebildet, dass während des Betriebes des Spannungswellengetriebes fortlaufend Öl in einem Schmierstoffkreislauf durch das Spannungswellengetriebe gepumpt wird.

Bevorzugt ist eine Ausführung des Spannungswellengetriebes, das eine Lebensdauerschmierung aufweist. Unter einer Lebensdauerschmierung wird insbesondere verstanden, dass das Spannungswellengetriebe bei seiner Herstellung einmalig mit einem Schmierstoff versehen wird, der bis zum geplanten Ende der Nutzungsdauer des Spannungswellengetriebes nicht ausgetauscht oder erneuert werden muss. Die Lebensdauerschmierung kann beispielsweise dadurch realisiert sein, dass bei der Herstellung des Spannungswellengetriebes, ein Schmierstoff, insbesondere Fett oder ein Festschmierstoff, eingefügt wird.

Wie nachfolgend ausgeführt ist, kann der Schmierstoff bei der Herstellung des Spannungswellengetriebes vorteilhaft beispielsweise in den Flextopf eingefügt werden. Alternativ oder zusätzlich kann auch vorgesehen sein, dass bei der Herstellung des Spannungswellengetriebes ein Schmierstoff, insbesondere Fett, in das Schmierstoffreservoir eingefügt wird. Bei einer besonderen Ausführung wird bei der Herstellung ein Schmierstoff, insbesondere Fett, sowohl in den Flextopf, als auch in das Schmierstoffreservoir eingefügt.

In den Flextopf kann vorteilhaft, vorzugsweise bei der Herstellung des Spannungswellengetriebes, ein Schmierstoff, insbesondere Fett, eingefügt sein. Im Betrieb des Spannungswellengetriebes wandert das Fett sukzessive aus dem von dem Flextopf umgebenen Raum durch das radialflexible Wälzlager und durch den Bereich zwischen Lageraußenring und Innenseite des Flextopfes und gelangt durch den Bereich zwischen der Innenverzahnung und der Außenverzahnung hindurch in das Schmierstoffreservoir. Grund für den Transport des Fetts ist die im Betrieb des Spannungswellengetriebes auf das Fett wirkende Zentrifugalkraft und eine durch die umlaufende Ovalisierung des Flextopfes entstehende Pumpwirkung. Das Schmierstoffreservoir hat zum einen den Vorteil, dass stets unmittelbar angrenzend an die Innenverzahnung und die Außenverzahnung Schmierstoff vorhanden ist, der insbesondere beim Neuanlauf des Getriebes zum Schmieren der Innenverzahnung und der Außenverzahnung zur Verfügung steht. Zum anderen wirkt das Schmierstoffreservoir in Bezug auf den oben beschriebenen Fettfluss als Bremse. Insbesondere kann durch Auswahl der Form und der Größe des Schmierstoffreservoirs die Bremswirkung voreingestellt werden. Insbesondere kann die Bremswirkung durch den Winkel der Innenseite des axial über die Innenverzahnung bzw. über den Bereich des Ineingriffs von Innenverzahnung und Außenverzahnung hinausragenden Teils des Circularsplines relativ zur Axialrichtung des Spannungswellengetriebes beeinflusst werden. Dieser Winkel kann Null Grad betragen. Er kann jedoch auch größer oder kleiner Null Grad sein.

Bei einer besonderen Ausführung ist die Außenfläche des Circularspline zylinderförmig ausgebildet. Alternativ oder zusätzlich kann vorteilhaft vorgesehen sein, dass der Circularspline keinen Flansch zur Befestigung des Circularspline aufweist und/oder dass der Circularspline keine Durchgangsbohrung für eine Befestigungsschraube aufweist und/oder dass der Circularspline ausschließlich reibschlüssig gehalten ist und/oder dass der Circularspline außer der Innenverzahnung keine weitere Verzahnung aufweist. Eine solche Ausführung ist vorteilhaft besonders robust und kompakt.

Von besonderem Vorteil ist ein motorisiertes Gelenk zum Verbinden von zwei relativ zueinander beweglichen Trägern eines programmierbaren Bewegungsautomaten, das einen Antriebsmotor und ein erfindungsgemäßes, dem Antriebsmotor triebtechnisch nachgeschaltetes Spannungswellengetriebe aufweist.

Bei einer besonderen Ausführung weist das Gelenk zwei relativ zueinander bewegliche Gehäuseteile auf, wobei der Antriebsmotor in einem der Gehäuseteile angeordnet ist und das Spannungswellengetriebe in dem anderen Gehäuseteil angeordnet ist. Alternativ oder zusätzlich kann auch vorgesehen sein, dass ein Teil des Spannungswellengetriebes in einem der Gehäuseteile angeordnet ist und ein anderer Teil des Spannungswellengetriebes in dem anderen Gehäuseteil angeordnet ist. Diese Ausführungen haben den besonderen Vorteil, dass die Gehäuseteile symmetrisch und/oder baugleich und/oder gleich groß ausgebildet sein können. Insbesondere ist es nicht erforderlich, dass einer der Gelenkteile besonders klobig ausgebildet ist, weil er sämtliche Elemente sowohl des Antriebsmotors, als auch des Spannungswellengetriebes aufnehmen muss.

Ein ganz besonderer Vorteil einer solchen Ausführung besteht darin, dass die Ebenen, innerhalb denen sich die Längsmittelachsen der Träger bewegen, einen geringeren Abstand zueinander aufweisen können. Dies hat den weiteren besonderen Vorteil, dass im Betrieb wenigstens auf einen der Träger ein geringeres Torsionsmoment einwirkt. Der Träger kann daher filigraner und/oder bauraumsparender dimensioniert werden.

Insbesondere kann ein Gehäuseteil dazu ausgebildet und angeordnet sein, starr direkt oder indirekt mit einem der Träger verbunden zu werden, während das andere Gehäuseteil dazu ausgebildet und angeordnet ist, starr mit dem anderen Träger verbunden zu werden. Es ist alternativ auch möglich, dass ein Gehäuse eines ersten Trägers zusätzlich auch als ein erstes Gehäuseteil fungiert und/oder dass ein Gehäuse eines zweiten Trägers zusätzlich auch als zweites Gehäuseteil fungiert.

Bei einer besonderen Ausführung ist das Gelenk dazu ausgebildet, zwei Träger derart zu verbinden, dass die Ebene in der sich einer der Träger bewegt und die Ebene in der sich der andere Träger bewegt stets parallel zueinander angeordnet sind. Bei einer anderen Ausführung ist das Gelenk dazu ausgebildet, zwei Träger derart zu verbinden, dass die Ebene in der sich einer der Träger bewegt und die Ebene in der sich der andere Träger bewegt stets senkrecht zueinander angeordnet sind.

Von besonderem Vorteil, insbesondere im Hinblick auf eine besondere Langlebigkeit, ist ein programmierbarer Bewegungsautomat, der wenigstens ein erfindungsgemäßes Spannungswellengetriebe beinhaltet.

Der programmierbare Bewegungsautomat kann insbesondere wenigstens ein motorisiertes Gelenk aufweisen, das ein erfindungsgemäßes Spannungswellengetriebe beinhaltet. Von besonderem Vorteil ist ein programmierbarer Bewegungsautomat mit zwei Trägern, die mittels eines erfindungsgemäßen motorisierten Gelenks relativ zueinander beweglich verbunden sind. Hierbei kann insbesondere vorteilhaft vorgesehen sein, dass einer der Träger direkt oder indirekt drehfest mit einem Stator des Antriebsmotors und/oder einem Antriebsmotorgehäuse des Antriebsmotors verbunden ist, während der andere der Träger drehfest an das Abtriebselement des Spannungswellengetriebes angekoppelt ist. Die zwei mittels des motorisierten Gelenks beweglich verbundenen Träger können beispielsweise Teil eines Roboterarmes sein.

Der programmierbare Bewegungsautomat kann insbesondere ein Industrieroboter sein.

In der Zeichnung ist der Erfindungsgegenstand beispielhaft und schematisch dargestellt und wird anhand der Figur nachfolgend beschrieben. Dabei zeigt:

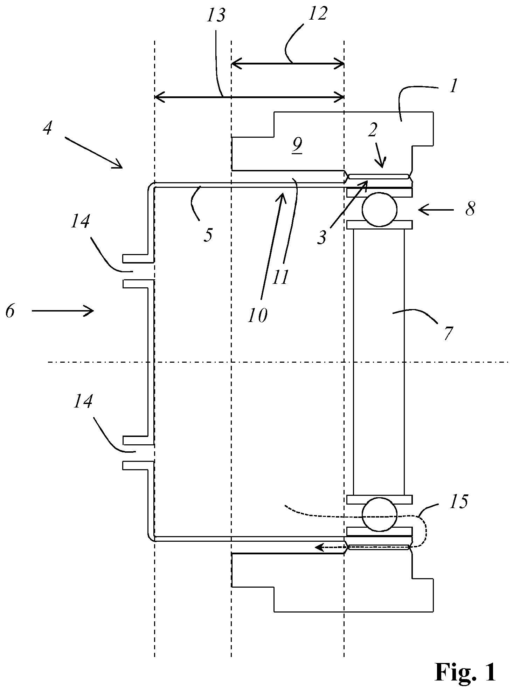

- Fig. 1: ein Ausführungsbeispiel eines erfindungsgemäßen Spannungswellengetriebes.

Fig. 1 zeigt ein Ausführungsbeispiel eines erfindungsgemäßen Spannungswellengetriebes. Das Spannungswellengetriebe hat einen Circularspline 1, dessen Innenverzahnung 2 mit der Außenverzahnung 3 eines Flextopfs 4 in Zahneingriff steht. Der Flextopf 4 weist eine Flextopfwandung 5 und einen Flextopfboden 6 auf. Innerhalb des Flextopfs 4 ist ein elliptischer Wellengenerator 7 mittels eines radialflexiblen Wälzlagers 8 rotierbar angeordnet. Der Wellengenerator 7 verformt das dem Flextopfboden 6 axial gegenüberliegende Ende des Flextopfs 4 zu einer elliptischen Form und bringt so die Außenverzahnung 3 des Flextopfs 4 mit der Innenverzahnung 2 des Circularsplines 1 an jedem Ende der Ellipsen-Hauptachse miteinander in Eingriff.

Der Circularspline 1 weist einen axial über die Innenverzahnung 2 hinausragenden Teil 9 auf, der zusammen mit einem Teilabschnitt 10 der Außenseite der Flextopfwandung 5 ein Schmierstoffreservoir 11 begrenzt. Das Verhältnis der axialen Länge 12 des hinausragenden Teils 9 des Circularsplines 1 zur axialen Länge 13 der Flextopfwandung 5 gemessen von der Innenseite des Flextopfbodens 6 bis zur Außenverzahnung 3 liegt im Bereich von 1/10 bis 8/10. In diesem Fall ist es auch so, dass das Verhältnis der axialen Länge 12 des axial über den Bereich des Ineingriffs von Innenverzahnung 2 und Außenverzahnung 3 hinausragenden Teils des Circularsplines 1 zu der axialen Länge 13 der Flextopfwandung 5 vom Flextopfboden 6 bis zum Bereich des Ineingriffs von Innenverzahnung 2 und Außenverzahnung 3 im Bereich von 1/10 bis 8/10 liegt, da die Innenverzahnung 2 und die Außenverzahnung 3 axial gleich lang sind und axial gleich positioniert sind.

Insbesondere kann das Verhältnis der axialen Länge des axial über die Innenverzahnung 2 hinausragenden Teils des Circularsplines 1 zu der axialen Länge der Flextopfwandung 5 vom Flextopfboden 6 bis zur Außenverzahnung 3 im Bereich von 2/10 bis 6/10 oder im Bereich von 3/10 bis 5/10 oder bei 4/10 liegen, wenn die Untersetzung des Spannungswellengetriebes i=80 beträgt. Alternativ kann das Verhältnis der axialen Länge 12 des axial über die Innenverzahnung 2 hinausragenden Teils des Circularsplines 1 zu der axialen Länge der Flextopfwandung 5 vom Flextopfboden 6 bis zur Außenverzahnung 3 beispielsweise im Bereich von 1/16 bis 10/16 oder im Bereich von 1/8 bis 3/8 oder bei 2/8 liegen, wenn die Untersetzung des Spannungswellengetriebes i=120 beträgt.

Der Wellengenerator 7 fungiert als Antrieb des Spannungswellengetriebes, während der Flextopf 4 als Abtrieb des Spannungswellengetriebes fungiert. Der Flextopfboden 6 ist als Befestigungsflansch mit Durchgängen 14 für Befestigungsschrauben ausgebildet. Anstelle eines Befestigungsflanschs kann der Flextopf 4 auch ein andersartiges Ankoppelmittel zum Ankoppeln einer Welle aufweisen. Beispielsweise kann der kann der Flextopfboden 6 auch ein Element einer Steckverzahnung oder ein asymmetrisches oder symmetrisches Lochbild aufweisen.

Bei der Herstellung des Spannungswellengetriebes wird in den von dem Flextopf 4 umgebenen Raum Fett eingefügt. Im Betrieb des Spannungswellengetriebes wandert das Fett entlang einem Transportweg 15 sukzessive aus dem von dem Flextopf 4 umgebenen Raum und durch das radialflexible Wälzlager 8 und durch den Bereich zwischen Lageraußenring des radialflexiblen Wälzlagers 8 und Innenseite des Flextopfes 4 nach außen. Danach gelangt das Fett dem Transportweg 15 weiter folgend durch den Bereich zwischen der Innenverzahnung 2 und der Außenverzahnung 3 hindurch in das Schmierstoffreservoir 11. Grund für den Transport des Fetts ist die im Betrieb des Spannungswellengetriebes auf das Fett wirkende Zentrifugalkraft und eine durch die umlaufende Ovalisierung des Flextopfs 4 entstehende Pumpwirkung.

Durch die im Betrieb des Spannungswellengetriebes fortwährend umlaufende Ovalisierung des Flextopfs 4 wird das in dem Schmierstoffreservoir 11 angesammelte Fett gewalkt, was einer schädlichen Trennung der Fettbestandteile in Grundöl und Seife wirkungsvoll entgegen wirkt.

### Bezugszeichenliste:

- 1: Circularspline
- 2: Innenverzahnung
- 3: Außenverzahnung
- 4: Flextopf
- 5: Flextopfwandung
- 6: Flextopfboden
- 7: Wellengenerator
- 8: Wälzlager
- 9: über die Innenverzahnung 2 hinausragender Teil des Circularspline 1
- 10: Teilabschnitt der Flextopfwandung 5
- 11: Schmierstoffreservoir
- 12: axiale Länge
- 13: axiale Länge
- 14: Durchgänge
- 15: Transportweg

## Patentansprüche

1. Spannungswellengetriebe mit einem Circularspline (1), dessen Innenverzahnung (2) mit der Außenverzahnung (3) eines Flextopfs (4), der eine Flextopfwandung (5) und einen Flextopfboden (6) aufweist, in Zahneingriff steht, **dadurch gekennzeichnet, dass** der Circularspline (1) einen axial über die Innenverzahnung (2) hinausragenden Teil (9) aufweist, der zusammen mit einem Teilabschnitt der Außenseite der Flextopfwandung (5) ein Schmierstoffreservoir (11) begrenzt, wobei
a. das Verhältnis der axialen Länge (12) des axial über die Innenverzahnung (2) hinausragenden Teils des Circularsplines (1) zu der axialen Länge (13) der Flextopfwandung (5) vom Flextopfboden (6) bis zur Außenverzahnung (3) im Bereich von 1/10 bis 8/10 liegt oder wobei
b. das Verhältnis der axialen Länge (12) des axial über den Bereich des Ineingriffs von Innenverzahnung (2) und Außenverzahnung (3) hinausragenden Teils des Circularsplines (1) zu der axialen Länge (13) der Flextopfwandung (5) vom Flextopfboden (6) bis zum Bereich des Ineingriffs von Innenverzahnung (2) und Außenverzahnung (3) im Bereich von 1/10 bis 8/10 liegt.

2. Spannungswellengetriebe nach Anspruch 1, **dadurch gekennzeichnet, dass**
a. das Spannungswellengetriebe keine Umlaufschmierung aufweist und/oder dass
b. das Spannungswellengetriebe eine Lebensdauerschmierung aufweist, und/oder dass
c. in den von dem Flextopf umgebenen Raum ein Schmierstoff, insbesondere Schmierfett oder ein Festschmierstoff, eingefügt ist, der im Betrieb des Spannungswellengetriebes sukzessive aus dem den Flextopf umgebenen Raum in das Schmierstoffreservoir wandert.

3. Spannungswellengetriebe nach Anspruch 1 oder 2, **dadurch gekennzeichnet, dass**
a. das Verhältnis der axialen Länge (12) des hinausragenden Teils des Circularsplines (1) zu der axialen Länge (13) der Flextopfwandung (5) vom Flextopfboden (6) bis zur Außenverzahnung (3) im Bereich von 1/5 bis 3/5 oder bei 2/5 oder bei 1/4 liegt, oder dass
b. das Verhältnis der axialen Länge (12) des hinausragenden Teils des Circularsplines (1) zu der axialen Länge (13) der Flextopfwandung (5) vom Flextopfboden (6) bis zur Außenverzahnung (3) im Bereich von 2/10 bis 6/10 oder im Bereich von 3/10 bis 5/10 oder bei 4/10 liegt, wenn die Untersetzung des Spannungswellengetriebes i=80 beträgt, oder dass
c. das Verhältnis der axialen Länge (12) des axial hinausragenden Teils des Circularsplines (1) zu der axialen Länge (13) der Flextopfwandung (5) vom Flextopfboden (6) bis zur Außenverzahnung (3) im Bereich von 1/16 bis 10/16 oder im Bereich von 1/8 bis 3/8 oder bei 2/8 liegt, wenn die Untersetzung des Spannungswellengetriebes i=120 beträgt.

4. Spannungswellengetriebe nach einem der Ansprüche 1 bis 3, **dadurch gekennzeichnet, dass**
a. die radiale Breite des Schmierstoffreservoirs (11) im Bereich von 2/10 bis 6/10 oder im Bereich von 3/10 bis 5/10 der axialen Länge (12) des hinausragenden Teils des Circularsplines (1) liegt oder 4/10 der axialen Länge (12) des hinausragenden Teils des Circularsplines (1) beträgt, und/oder dass
b. die radiale Breite des Schmierstoffreservoirs (11) im Bereich von 1 mm bis 2 mm oder im Bereich von 1,3 mm bis 1,7 mm liegt oder 1,5 mm beträgt.

5. Spannungswellengetriebe nach einem der Ansprüche 1 bis 4, **dadurch gekennzeichnet, dass**
a. die Zähneanzahl der Außenverzahnung (3) zwischen 152 und 168 Zähnen oder im Bereich von 160 bis 240 Zähnen liegt oder dass die Zähneanzahl der Außenverzahnung (3) genau 160 Zähne beträgt oder genau 240 Zähne beträgt, und/oder dass
b. die Innenverzahnung (2) genau zwei Zähne mehr aufweist, als die Außenverzahnung und/oder dass
c. die Außenverzahnung (3) einen Teilkreisdurchmesser im Bereich von 50 mm bis 53 mm oder im Bereich von 50,5 mm bis 51,5 mm oder im Bereich von 51,0 mm bis 51, 5 mm aufweist oder 51,2 mm ist, wenn die Untersetzung des Spannungswellengetriebes i=80 beträgt oder 51,4 mm ist, wenn die Untersetzung des Spannungswellengetriebes i=120 beträgt und/oder dass
d. die Innenverzahnung (2) einen Teilkreisdurchmesser im Bereich von 50 mm bis 53 mm oder im Bereich von 51,8 mm bis 52,3 mm aufweist.

6. Spannungswellengetriebe nach einem der Ansprüche 1 bis 5, **dadurch gekennzeichnet, dass**
a. das Spannungswellengetriebe eine Deflektion im Bereich von 0,3 mm bis 0,9 mm oder im Bereich von 0,4 mm bis 0,8 mm aufweist und/oder dass die Deflektion im Bereich von 0,5 % bis 1,5% des Teilkreisdurchmessers der Außenverzahnung (3) des Flextopfes (4) liegt, oder dass
b. die Deflektion im Bereich von 0,6 mm bis 0,9 mm oder im Bereich von 0,7 mm bis 0,8 mm oder bei 0,73 mm liegt, wenn die Untersetzung des Spannungswellengetriebes i= 120 beträgt, oder dass
c. die Deflektion im Bereich von 0,3 mm bis 0,7 mm oder im Bereich von 0,4 mm bis 0,6 mm oder bei 0,5 mm liegt, wenn die Untersetzung des Spannungswellengetriebes i=80 beträgt.

7. Spannungswellengetriebe nach einem der Ansprüche 1 bis 6, **dadurch gekennzeichnet, dass**
a. die Außenverzahnung (3) und/oder die Innenverzahnung (2) eine axiale Länge (12) im Bereich von 7 mm bis 10 mm oder im Bereich von 8 bis 9 mm aufweist, und/oder dass
b. der Flextopfboden (5) einen Befestigungsflansch aufweist oder dass der Flextopfboden (5) als Befestigungsflansch ausgebildet ist.

8. Spannungswellengetriebe nach einem der Ansprüche 1 bis 7, **dadurch gekennzeichnet, dass** in dem Flextopf (4) und/oder dem Schmierstoffreservoir (11) ein Schmierstoff, insbesondere Fett oder ein Festschmierstoff, angeordnet ist.

9. Spannungswellengetriebe nach einem der Ansprüche 1 bis 8, **dadurch gekennzeichnet, dass** die Außenfläche des Circularspline (1) zylinderförmig ausgebildet ist und/oder dass der Circularspline (1) keinen Flansch zur Befestigung des Circularspline (1) aufweist und/oder dass der Circularspline (1) keine Durchgangsbohrung für eine Befestigungsschraube aufweist und/oder dass der Circularspline (1) ausschließlich reibschlüssig behalten ist und/oder dass der Circularspline (1) außer der Innenverzahnung (2) keine weitere Verzahnung aufweist.

10. Motorisiertes Gelenk zum Verbinden von zwei relativ zueinander beweglichen Trägern eines programmierbaren Bewegungsautomaten, das einen Antriebsmotor und ein dem Antriebsmotor triebtechnisch nachgeschaltetes Spannungswellengetriebe nach einem der Ansprüche 1 bis 9 aufweist.

11. Motorisiertes Gelenk nach Anspruch 10, **dadurch gekennzeichnet, dass** das Gelenk zwei relativ zueinander bewegliche Gehäuseteile aufweist, wobei
a. der Antriebsmotor in einem der Gehäuseteile angeordnet ist und das Getriebe in dem anderen Gehäuseteil angeordnet ist, oder dass
b. ein Teil des Getriebes in einem der Gehäuseteile angeordnet ist und ein anderer Teil des Getriebes in dem anderen Gehäuseteil angeordnet ist.

12. Motorisiertes Gelenk nach Anspruch 10 oder 11, **dadurch gekennzeichnet, dass**
a. das Gelenk dazu ausgebildet ist, zwei Träger derart zu verbinden, dass die Ebene in der sich einer der Träger bewegt und die Ebene in der sich der andere Träger bewegt stets parallel zueinander angeordnet sind, oder dass
b. das Gelenk als Scharniergelenk ausgebildet ist, oder dass
c. das Gelenk dazu ausgebildet ist, zwei Träger derart zu verbinden, dass die Ebene in der sich einer der Träger bewegt und die Ebene in der sich der andere Träger bewegt stets senkrecht zueinander angeordnet sind.

13. Programmierbarer Bewegungsautomat, der
a. wenigstens ein Spannungswellengetriebe nach einem der Ansprüche 1 bis 9 aufweist, oder der
b. wenigstens ein Spannungswellengetriebe nach einem der Ansprüche 1 bis 9 aufweist und ein Industrieroboter ist.

14. Programmierbarer Bewegungsautomat, der
a. wenigstens ein motorisiertes Gelenk nach einem der Ansprüche 10 bis 12 aufweist und/oder der zwei Träger aufweist, die mittels eines motorisierten Gelenks nach einem der Ansprüche 10 bis 12 relativ zueinander beweglich verbunden sind, oder der
b. wenigstens ein motorisiertes Gelenk nach einem der Ansprüche 10 bis 12 aufweist und/oder der zwei Träger aufweist, die mittels eines motorisierten Gelenks nach einem der Ansprüche 10 bis 12 relativ zueinander beweglich verbunden sind, wobei einer der Träger direkt oder indirekt drehfest mit einem Stator des Antriebsmotors und/oder einem Antriebsmotorgehäuse des Antriebsmotors verbunden ist und dass der andere Träger drehfest an ein Abtriebselement des Spannungswellengetriebes angekoppelt ist, oder der
c. wenigstens ein motorisiertes Gelenk nach einem der Ansprüche 10 bis 12 aufweist und/oder der zwei Träger aufweist, die mittels eines motorisierten Gelenks nach einem der Ansprüche 10 bis 12 relativ zueinander beweglich verbunden sind, wobei die zwei mittels des motorisierten Gelenks beweglich verbundenen Träger Teil eines Roboterarmes sind.

15. Programmierbarer Bewegungsautomat nach Anspruch 13 oder 14, **dadurch gekennzeichnet, dass** das Gelenk zwei relativ zueinander bewegliche Gehäuseteile aufweist, wobei
a. einer der Träger mit einem der Gehäuseteile fest verbunden ist und der andere Träger mit dem anderen Gehäuseteil fest verbunden ist, oder wobei
b. eines der Gehäuseteile Bestandteil eines der Träger ist, oder wobei
c. eines der Gehäuseteile Bestandteil eines Gehäuses eines der Träger ist und das andere Gehäuseteil Bestandteil eines Gehäuses des anderen Trägers ist.
